# EUROPEAN PATENT SPECIFICATION

(11) **EP 1 113 920 B1**
(45) Date of publication and mention of the grant of the patent: **22.01.2003**
(21) Application number: 99946331.8
(22) Date of filing: 14.09.1999
(51) Int. Cl.: B30B 11/24, A23P 1/12, B30B 15/30

(54) **IMPROVEMENTS IN OR RELATING TO APPARATUS AND METHODS FOR PRODUCING FOOD PRODUCTS**
VORRICHTUNGEN UND VERFAHREN ZUR HERSTELLUNG VON NAHRUNGSMITTELN
PERFECTIONNEMENTS SE RAPPORTANT A UN APPAREIL ET A DES PROCEDES DE PRODUCTION DE PRODUITS ALIMENTAIRES

(30) Priority: 15.09.1998 GB 9820120
(43) Date of publication of application: 11.07.2001
(73) Proprietor: Van Dalsem Design B.V., 1823 GB Alkmaar (NL); H.O. Short & Son Ltd, Berwick-upon-Tweed TD15 2AB (GB)
(72) Inventor: VAN DALSEM, Simon, NL-1823 GB Alkmaar (NL); GLADSTONE, Thomas, Black, Short, Berwick-upon-Tweed TD15 2NZ (GB)
(74) Representative: Jackson, Richard Eric
(86) International application number: GB9903044
(87) International publication number: WO00015423

(56) References cited:
- EP-A- 0 457 495
- EP-A- 0 694 261
- FR-A- 2 683 124
- GB-A- 1 081 201
- GB-A- 2 274 802

## Description

The invention relates to apparatus and methods for producing food products, and more particularly but not exclusively to the production of breakfast cereals and cereal based snacks. Such an apparatus is known from EP 0 694 261 A.

One particular sort of cereal or snack is a agglomerate of cereals, together with a binder such as syrup. The traditional way of making such a product consists of spreading a 'wet' blend of predominantly prefabricated cereals, some of which are puffed or crisped or flaked and hence very fragile, and a binding syrup, as a continuous layer onto a perforated continuous oven band, whereby during the baking/drying process a firm 'cake' is formed, which after sufficient cooling can be broken by means of mechanical breaking rolls or similar apparatus into the desired maximum size range for spoon-eaten breakfast cereals. As a consequence of this well established method, a significant amount of fines and unacceptably small pieces will result as a by-product, some of which can be recycled back into the wet blend, but with an upper limit of about 10% of that blend. The resulting agglomerate pieces of the preferred size range are usually called 'clusters'.

The fact that powerful breaking rolls were used is visible from the fracture zones of the finished clusters. These fracture zones can detract considerably from desired product appearance, and can reduce the crispness of those clusters in milk or yoghurt significantly, due to local absence of the desired continuous coating of binding sugars and non-sugar glazing ingredients.

According to the invention, there is provided an apparatus as claimed in claim 1.

The drive element is preferably an elongate screw threaded element, and may be either an auger or an open helix screw element.

The drive element preferably extends at least partly along the length of the compression section.

The feed section preferably includes a plurality, and more preferably a multiplicity of parallel channels, and the compression section a corresponding number of tubes. The width of the compression section across the channels preferably matches the width of a conveyer onto which food leaving the compression section falls.

The or each drive element is preferably removably mounted in the apparatus so that different drive elements can be used.

The diameter of the drive elements is preferably in the range 5mm to 150mm, for example 5mm to 35mm and preferably 10mm to 25mm for a range of breakfast cereal snacks, and from 10mm to 150mm (preferably 20mm to 100mm, and more preferably 25mm to 75mm) for snack food items or functional food items.

The diameter of the or each tube in the compression section is preferably between 0.1mm and 10mm larger than the drive element diameter, preferably 1mm to 5mm larger.

The compression section preferably has means to allow variation in the length of the or each tube. This is preferably achieved by interchangeability of compression section elements.

The apparatus preferably includes a raking device for movement over the feed section channel or channels to spread food along the length of the channel or channels.

The apparatus may include a cutter at the end of the compression section for cutting into sections food leaving the compression section.

The invention further provides food manufacturing apparatus comprising ingredient silos, mixing apparatus, conveying means for transferring ingredients from the silos to the mixing apparatus, a binding material container, means for conveying binding material to the mixing apparatus, delivery apparatus for delivering mixed ingredients and binding material to apparatus according to the invention, an oven and a conveyer for conveying food from the compression section through the oven.

The invention further provides a method of producing a food product using apparatus according to the invention, comprising the steps of introducing a food mixture into a feed section of the apparatus, moving the food mixture along the open channel of the feed section by operating the drive element, compressing the food mixture in the compression section and removing for further processing food leaving the compression section of the apparatus.

The drive element is preferably operated continuously during the method according to the invention.

The method may comprise a further step of selecting a desired length of the compression section to achieve a desired compression of the food mixture.

The method may comprise the step of cutting the food mixture as it leaves the compression section.

By way of example, embodiments of apparatus and a method for producing food products will now be described with reference to the accompanying drawings, in which:
Figure 1 is a schematic view of a complete installation for producing a food product;
Figure 2 is a side view, partly in section, of apparatus according to the invention;
Figure 3 is a front view of the apparatus of Figure 2 with a front portion in chain lines to show clearly a feed section of the apparatus; and
Figure 4 is a side view similar to that of Figure 2, but of an alternative embodiment of apparatus according to the invention.

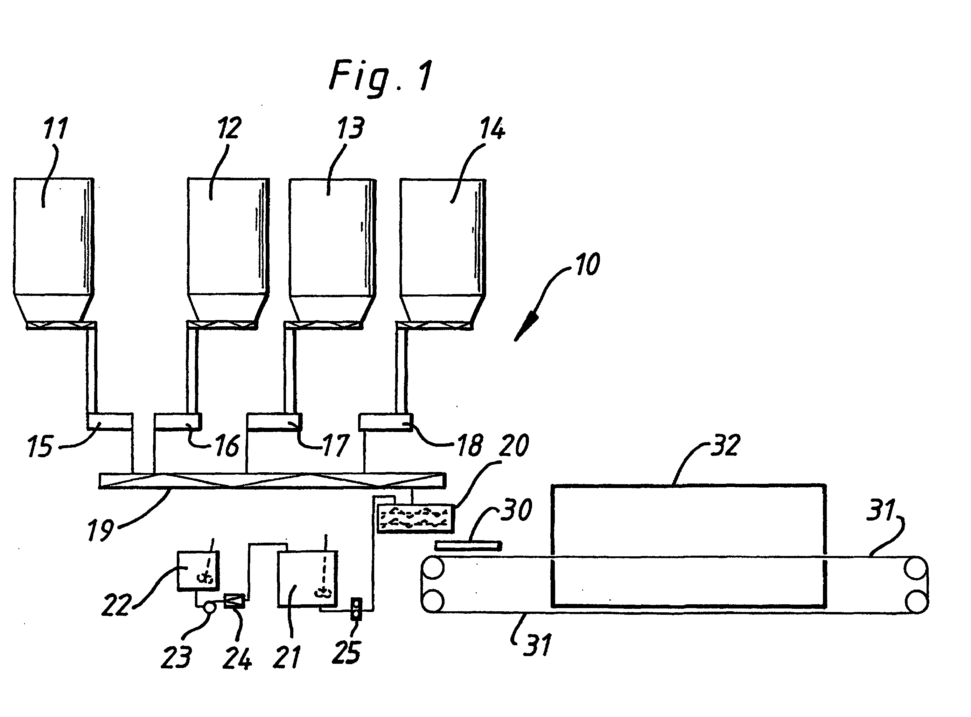

With reference to Figure 1, an installation 10 for producing a food product has four ingredient silos 11, 12, 13, 14 for containing dry ingredients such as cereal, flour, grain, nuts, fibre-rich materials, herbs, spices, processed cereals (such as rolled, flaked, puffed, crisped and/or low density extruded cereals), fruit pieces or indeed any food or food component suitable for the intended use. The silos have metering equipment, such as weigh band feeders 15, 16, 17, 18 for metering the flow of ingredients from the silos 11, 12, 13, 14 onto a conveyor 19 which conveys the ingredients to a mixing station 20. Also fed into the mixing station 20 is an edible binding solution (for example, a solution/dispersion of sugars, starches, molasses, maltodextrins, glucose syrups, fats and oils, as well as flavourings) fed from a binder holding vessel 21 which is in turn fed from a binder preparation vessel 22. A standard sanitary pump 23 is used to transfer the binder solution from the preparation vessel 22 to the holding vessel 21, via an in-line filter element 24 (which is optional). A positive displacement pump 25 of sanitary design provides continuous metering of the desired flow of binder solution to the mixing station 20. The silos 11, 12, 13, 14, metering equipment 15, 16, 17, 18, conveyor 19, mixing station 20, binder holding vessel 21 and binder preparation vessel 22 are all standard and will be familiar to those skilled in the art. For this reason, a more detailed description is not supplied.

Material from the mixing station 20 is fed to apparatus 30 according to the invention for producing a food product and food product from the apparatus 30 falls onto a continuous conveyor 31 which moves the food product through an oven 32, which includes a cooling section, after which the final food product is taken away for packaging (not shown).

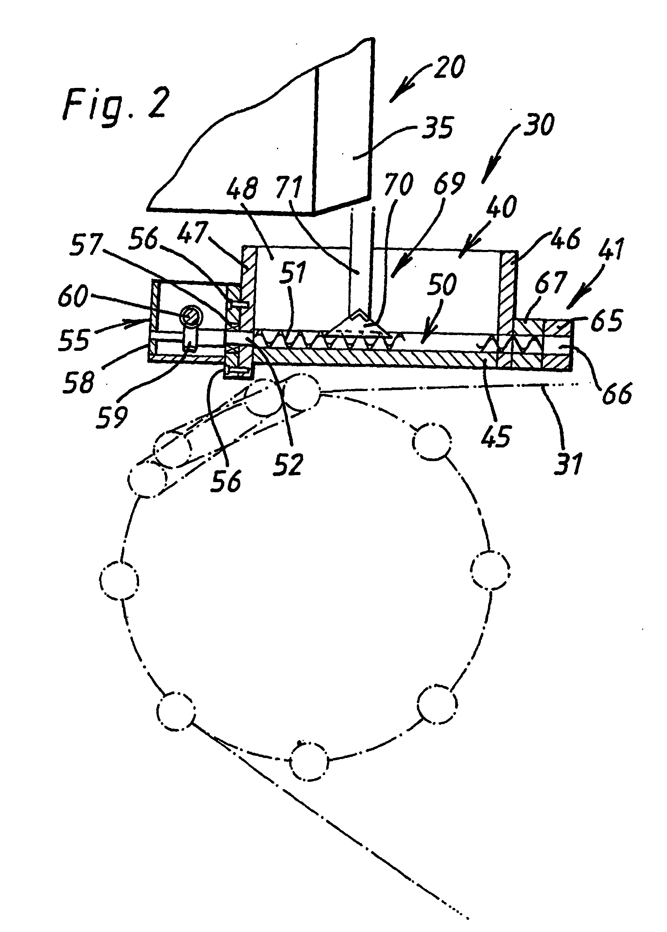

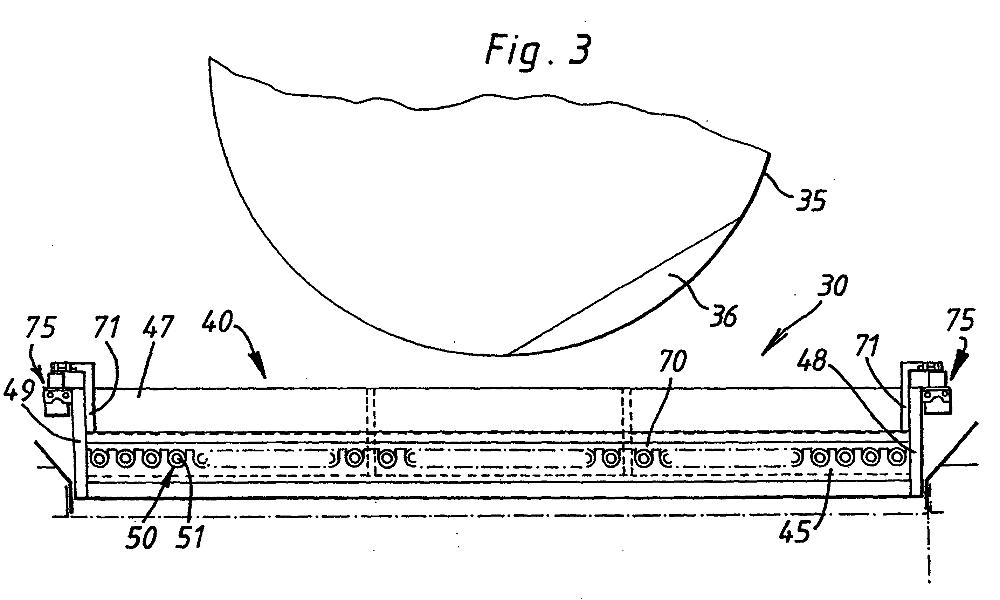

The mixing station 20 and the apparatus 30 will be described in more detail in relation to Figures 2 and 3 of the drawings.

As shown in Figures 2 and 3, the mixing station 20 has a flow-through, rotating mixing drum 35 which rotates to mix ingredients supplied from the silos 11, 12, 13, 14 together with binder material to form an ingredient mixture 36. As can be seen in Figure 2, the drum 35 has an axis of rotation inclined at a small angle to the horizontal so that the mix 36 will tend to flow along the drum 35 (from left to right in Figure 2) until it leaves the drum 35. Alternatively, a continuous mixer with paddles and/or augers may be used. The mixing drum 35 (or, in the alternative, the continuous mixer) may be mounted on an axis via a subframe, allowing a pivoting movement to spread mixed material evenly into the apparatus 30 for processing the mixture.

The apparatus 30 for processing the mixture 36 has a feed section generally indicated at 40 and a compression section generally indicated at 41. The feed section 40 has a compartment open at the top defined by a base 45, a front wall 46, a back wall 47 and side walls 48, 49. The base 45 is formed with a series of parallel U-shaped channels 50 in each of which lies a drive element 51. Each drive element 51 is screw threaded and in the embodiment described is a conveying screw of an open helix design, although it will be appreciated that a conventional auger design may be used. The drive elements 51 can be manufactured from any food approved metal or plastics material which provides sufficient strength to withstand the relatively low pressures generated in the apparatus. The walls and base of the feed section are manufactured from food approved materials such as stainless steel and/or PTFE, and are of a smooth surface to minimise build up of residual material and also to ease cleaning.

The drive elements 51 each extend from a drive shaft 52 which passes through the rear wall 47 of the feed section and into a drive section 55 secured to the rear wall 47 of the feed section 40 by bolts 56. Each drive shaft 52 is journalled in a bearing 57 and is located also for rotation in a rear wall 58 of he drive section 55. Each drive shaft 52 carries a roller gear 59 and all the roller gears 59 are driven by an elongate worm gear 60 which extends across the width of the feed section and is driven by a motor or other drive means which is not shown.

The compression section 41 extends from the front wall 46 of the feed section, the front wall 46 having a series of holes in it, through which holes the drive elements 51 pass. The drive elements 51 extend some way into the compression section 41, as shown in Figure 2, and the compression section 41 has at the free, front end thereof a compression member 65 which provides a series of tubes 66, one for each drive element 51 and channel 50, through each of which material is urged by the associated drive element 51. The compression member 65 is removably mounted on a base block 67 of the compression section 41, the base block also having a series of cylindrical holes formed therein, each engaged by an associated drive element 51 as shown in Figure 2. The means of attachment of the compression member 65 are not shown in Figure 2 but consist of bolts or other suitable means for removably holding the compression member 65 in place.

Interchangeability of the compression member 65 is important since it will be appreciated that the longer the compression member 65 extends away from the feed section, and therefore the longer the tubes 66 are, the more material will be compressed before it emerges from the compression section 41. The amount of compression exerted on the material being processed will effect the nature of the resulting food product. The compression section 41 is made from food approved materials, such as stainless steel and/or PTFE and has a smooth surface to minimise build up of material and to ease cleaning.

The diameter of each of the screw drive elements 51 can range from 5mm to 150mm and is preferably in the range 5mm to 35mm diameter for a range of breakfast cereal products, more typically in the range 10mm to 25mm, and for 15mm to 150mm diameter for snack food items or functional food items, the diameter range preferably being 20mm to 100mm or typically 25mm to 75mm. It will be appreciated that these sizes are all preferred rather then essential.

The diameter of tubes 66 in the compression section 41 is in the range 0.1mm to 10mm larger than the diameter of the screw drive elements 51 and preferably between 1mm and 5mm larger than the diameter of the screw drive elements 51.

As can be seen in Figure 3, this embodiment or apparatus has thirty two drive elements 51 and associates channels 50 in the feed section and the compression section 41 also has thirty two tubes 66 arranged parallel to one another. It will be appreciated that the apparatus could operate with a single screw or indeed more screws and an ideal arrangement is where the width of the apparatus corresponds to the width of a conveyor onto which food from the apparatus is collected for subsequent cooking or other processing.

As can be seen in Figure 2, the distance between the outlet from the tubes 66 and the conveyor 31 is small, in order to minimise distortion of food product leaving the tubes 66. If a more irregular shape of food is desired, the fall height can be increased, thereby allowing a degree of distortion. It is anticipated that the free distance of the apparatus above the oven band can be varied from 2mm to 100mm.

As can also be seen in Figure 2, the apparatus 30 is positioned at a small angle towards the conveyor 31. This arrangement facilitates wet cleaning and evacuation of cleaning liquids. It will be appreciated that the apparatus could be horizontal, or arranged at larger angles to the horizontal. The invention itself, as claimed, is not limited to arrangement of the apparatus at any particular angle to the horizontal.

In use, the mixture 36 from the drum 35 falls into the feed section 40 and spread over the base area of the feed section by a raking device generally indicated at 69 in Figure 2. The raking device 69 has an elongate bar 70 extending across the width of the feed section, the bar 70 being of stainless steel, reinforced nylon or other suitable food approved material and has a bottom profile designed to match the configuration of the screw drive elements 51 and the channels 50 of the base 45 of the feed section 40. The bar 70 is supported on arms 71 and the arms 71 are mounted on side walls 48, 49 and reciprocated up and down the feed section 40 by drive assemblies 75. The drive assemblies 75 operate pneumatically, with the aid of a timing device, to provide reciprocal movement, with intervals as desired. It will be appreciated that alternative drive mechanisms could be used. The bar 70 is of double-wedge profile, as shown in Figure 2, and reciprocation of the bar 70, the lowest parts of which will be submerged in wet mixture in use, ensures proper spreading of the mixture into all the channels 50.

An alternative raking device consists of a set of rods suspended from one or more arms and arranged to make circular or reciprocating movements inside the perimeter of the feed section, just above the conveying screws.

As explained above, the length of the tubes 66 in the compression member 65 will determine the amount of compression of material being processed. It has been found that tubes 66 with a length of 20mm to 60mm, more typically 30mm to 50mm, provide shaped food pieces with a low level of compression, presenting a natural irregular appearance. A more extended compression section, with the tubes 66 having a length between 40mm and 150mm provides sufficient compression to allow a more defined shape to be formed, depending on the size and shape of the final part of the compression zone and the shape of the orifice. It will be appreciated that the shape of the orifice from which material leaves the compression member 65 could be varied, for example to provide an orifice which is square, triangular, trapezoid or oval.

The apparatus 30 may be provided with a cut-off device but none is shown in the drawings. Cut-off devices could be of various types. A guillotine cut-off device, with a straight or angled blade is a preferred type, but rotary cutting knives or diaphragm operated cutters can be used successfully.

A device to close the extrusion orifice temporarily can be employed to obtain sufficient compression to allow defined food shapes to be created. The closing device could be combined with a cut-off device, if desired.

The agglomerated food products thus obtained can be packed directly after baking/drying upon sufficient cooling and there is no need for breaking up into smaller sizes, or size classification with a set of screens. All food components are well and evenly covered by a protective layer of glazing ingredients, providing optimum crispness and improved "bowl life" where a cereal product is immersed in milk or other liquid. The low compression applied to delicate materials, such as puffed cereals ensures that the delicate structures are not damaged. The apparatus allows use of soft materials such as soft fruit pieces, and the application of those fruit pieces formulated to withstand baking/drying are now a realistic option.

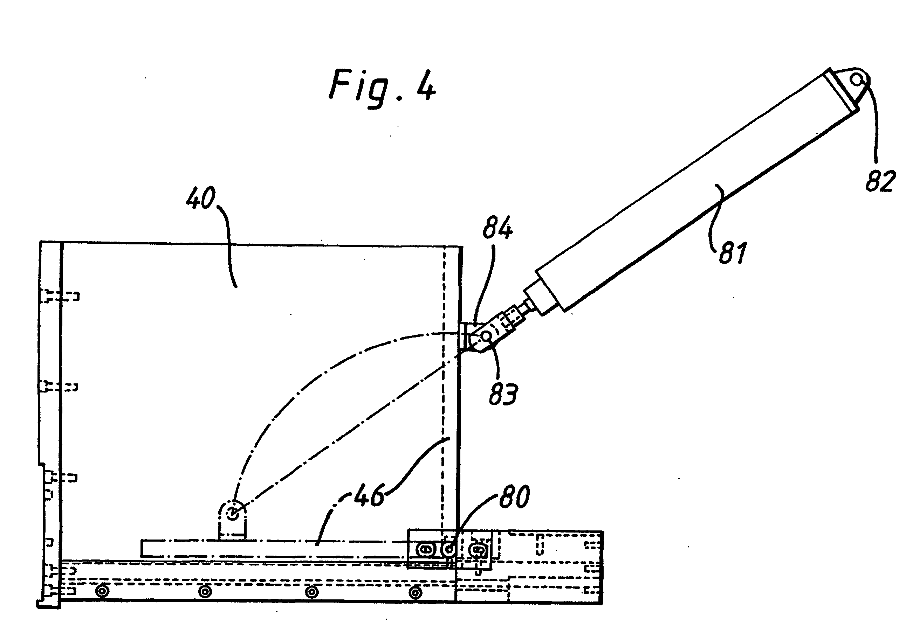

Turning now to Figure 4, an alternative embodiment of apparatus 30 is shown. In this embodiment, the front wall 46 has been enlarged and mounted about a hinge 80. The hinged front wall 46 has a width which is identical to the internal width of the feed section 40. A pneumatic drive cylinder 81 is mounted at one end 82 to a support structure (not shown) and at its other end 83 to a flange 84 extending from the hinged front wall 46. Upon activation of the drive cylinder 81, the front wall 46 pivots about hinge 80 to act as a compression plate to apply pressure to the mixture 36 such that the mixture 36 is continuously fed to the drive elements 51. The amount of pressure can be readily controlled by controlling the drive cylinder 81, which could be hydraulically driven rather than pneumatic, and the pressure can be released quickly when desired simply by swinging the front plate 46 about the hinge 80 into its vertical position.

As can be seen in Figure 4, the hinged front plate 46 can move between a vertical position and a substantially horizontal position. When in its vertical position, any mixture 36 adhering to the wall 46 can be allowed to fall onto the drive elements 51 whilst fresh mixture 36 is introduced from the mixing drum 35. If necessary, material could be scraped from the front plate 46 to prevent unwanted build-up of mixture 36 on the front plate.

By using a hinged front plate 46 as shown in Figure 4, a significantly increased product output can be obtained, and the range of materials that can be handled is increased. Further, materials with little or no lubrication or of poor flow characteristics can be used.

It will be appreciated that variations and modifications to the apparatus described may be made; the scope of the invention is defined in the appended claims.

## Claims

1. A fragile puffed, crisped or flaked cereal food product producing apparatus comprising a feed section and a compression section, the feed section comprising an open channel into which food including fragile puffed, crisped or flaked cereal for processing is introduced and a substantially horizontal drive element in the channel for moving the food along the channel without causing excessive fracturing of the puffed, crisped or flaked cereal, the compression section lying adjacent the feed section such that food is moved by the drive element from the channel into the compression section, the compression section comprising a tube of desired cross-section and length, whereby in use food is moved along the channel and into the compression section by the drive element, subjected to a desired compression in the compression section and then leaves the compression section at the end thereof remote from the feed section in a substantially unfractured state.

2. Apparatus as claimed in claim 1 wherein the drive element is an elongate screw threaded element.

3. Apparatus as claimed in claim 2 wherein the drive element is an open helix screw element.

4. Apparatus claimed in claim 2 wherein the drive element is an auger.

5. Apparatus as claimed in any one of claims 1 to 4 wherein the drive element extends at least partly along the length of the compression section.

6. Apparatus as claimed in any one of claims 1 to 5 wherein the feed section includes a plurality of parallel channels and a compression section having a corresponding number of tubes.

7. Apparatus as claimed in claim 6 comprising a multiplicity of parallel channels with the compression section having a corresponding number of tubes.

8. Apparatus as claimed in claim 6 or claim 7 wherein the width of the compression section across the channels matches the width of a conveyor onto which food leaving the compression section falls.

9. Apparatus as claimed in any one of claims 1 to 8 wherein the or each drive element is removably mounted in the apparatus to allow interchangeability of drive elements.

10. Apparatus as claimed in any one of claims 1 to 9 wherein the or each drive element has a diameter in the range 5mm to 150mm.

11. Apparatus as claimed in claim 10 wherein the or each drive element has a diameter in the range 10mm to 25mm.

12. Apparatus as claimed in claim 10 wherein the or each drive element has a diameter in the range 25mm to 75mm.

13. Apparatus as claimed in any one of claims 1 to 12 wherein the diameter of the or each tube in the compression section is between 0.1mm and 10mm larger than the drive element diameter.

14. Apparatus as claimed in claim 13 wherein the diameter of the or each tube in the compression section is between 1mm and 5mm larger than the drive element diameter.

15. Apparatus as claimed in any one of claims 1 to 14 wherein the compression section has means to allow variation in the length of the or each tube.

16. Apparatus as claimed in claim 15 wherein variation in the length of the compression section is provided by interchageability of compression section elements.

17. Apparatus as claimed in any one of claims 1 to 16 including a raking device for movement over the feed section channel or channels to spread the food along the length of the channel or channels.

18. Apparatus as claimed in any one of claims 1 to 17 including a cutter at the end of the compression section for cutting into sections food leaving the compression section.

19. Apparatus as claimed in any one of claims 1 to 18 including a compression plate for applying pressure to food within the feed section such that the food is urged towards the drive element for onward movement into the compression section.

20. Food manufacturing apparatus comprising ingredient silos, mixing apparatus, conveying means for transferring ingredients from the silos to the mixing apparatus, a binding material container, means for conveying binding material to the mixing apparatus, apparatus as claimed in any one of claims 1 to 19, delivery apparatus for delivering mixed ingredients and binding material from the mixing apparatus to the apparatus as claimed in any one of claims 1 to 19, an oven and a conveyor for conveying food from the compression section through the oven.

21. A method of producing a food product using apparatus as claimed in any one of claims 1 to 20 comprising the steps of introducing a food mixture into a feed section of the apparatus, moving the food mixture along the open channel of the feed section by operating the drive element, compressing the food mixture in the compression section and removing for further processing food leaving the compression section of the apparatus.

22. A method as claimed in claim 21 wherein the drive element is operated continuously.

23. A method as claimed in claim 21 or claim 22 comprising a further step of selecting a desired length of the compression section to achieve a desired compression of the food mixture.

24. A method as claimed in any one of claims 21 to 23 comprising the step of cutting the food mixture as it leaves the compression section.

## Patentansprüche

1. Vorrichtung zum Herstellen eines zerbrechlichen gepufften, gerösteten oder flockigen Getreidenahrungsmittelerzeugnisses, mit einem Zuführabschnitt und mit einem Verdichtungsabschnitt, wobei der Zuführabschnitt einen offen Kanal aufweist, in den ein Nahrungsmittel, einschließlich zerbrechlichem gepufften, gerösteten oder flockigen Getreide zur Verarbeitung einführbar ist, und mit einem im wesentlichen horizontalen Treibelement in dem Kanal, um das Nahrungsmittel längs des Kanals zu bewegen, ohne daß dabei ein exzessives Brechen des gepufften, gerösteten oder flockigen Getreides verursacht wird, wobei der Verdichtungsabschnitt benachbart zum Zuführabschnitt liegt, so daß das Nahrungsmittel durch das Treibelement aus dem Kanal in den Verdichtungsabschnitt bewegt wird, wobei der Verdichtungsabschnitt ein Rohr mit gewünschtem Querschnitt und Länge aufweist, wobei im Betrieb das Nahrungsmittel durch das Treibelement entlang des Kanals und in den Verdichtungsabschnitt bewegt wird, in dem Verdichtungsabschnitt einer gewünschten Verdichtung unterworfen wird und anschließend den Verdichtungsabschnitt an dem Ende, das entfernt von dem Zuführabschnitt ist, in einem im wesentlichen ungebrochenen Zustand verläßt.

2. Vorrichtung nach Anspruch 1, bei der das Treibelement ein langerstrecktes schraubenförmig gewundenes Element ist.

3. Vorrichtung nach Anspruch 2, bei der das Treibelement ein Element mit einer offenen schraubenlinienförmigen Schraube ist.

4. Vorrichtung nach Anspruch 2, bei der das Treibelement eine Schnecke ist.

5. Vorrichtung nach einem der Ansprüche 1 bis 4, bei der das Treibelement sich zumindest teilweise längs der Länge des Verdichtungsabschnittes erstreckt.

6. Vorrichtung nach einem der Ansprüche 1 bis 5, bei der der Zuführabschnitt eine Vielzahl von parallelen Kanälen beinhaltet und wobei der Verdichtungsabschnitt eine entsprechende Anzahl an Röhren aufweist.

7. Vorrichtung nach Anspruch 6, die eine Vielfalt an parallelen Kanälen aufweist, wobei der Verdichtungsabschnitt eine entsprechende Anzahl von Röhren aufweist.

8. Vorrichtung nach Anspruch 6 oder 7, bei der die Breite des Verdichtungsabschnitts, über die Kanäle gesehen, passend zu der Breite eines Förderers ist, auf die das Nahrungsmittel, das den Verdichtungsabschnitt verläßt, fällt.

9. Vorrichtung nach einem der Ansprüche 1 bis 8, bei der das oder jedes Treibelement abnehmbar in der Vorrichtung angebracht ist, um einen Austausch der Treibelemente zu ermöglichen.

10. Vorrichtung nach einem der Ansprüche 1 bis 9, bei der das oder jedes Treibelement einen Durchmesser im Bereich von 5 bis 150 mm aufweist.

11. Vorrichtung nach Anspruch 10, bei der das oder jedes Treibelement einen Durchmesser im Bereich von 10 bis 25 mm aufweist.

12. Vorrichtung nach Anspruch 10, bei der das oder jedes Treibelement einen Durchmesser im Bereich von 25 bis 75 mm aufweist.

13. Vorrichtung nach einem der Ansprüche 1 bis 12, bei der der Durchmesser der oder jeder Röhre im Verdichtungsabschnitt zwischen 0,1 mm und 10 mm größer als der Durchmesser des Treibelementes ist.

14. Vorrichtung nach Anspruch 13, **dadurch gekennzeichnet, daß** der Durchmesser der oder jeder Röhre im Verdichtungsabschnitt zwischen 1 mm und 5 mm größer als der Durchmesser des Treibelementes ist.

15. Vorrichtung nach einem der Ansprüche 1 bis 14, bei der der Verdichtungsabschnitt Mittel aufweist, die eine Variation der Länge der oder jeder Röhre ermöglichen.

16. Vorrichtung nach Anspruch 15, bei der die Variation in der Länge des Verdichtungsabschnitts durch die Austauschbarkeit von Elementen des Verdichtungsabschnittes geschaffen ist.

17. Vorrichtung nach einem der Ansprüche 1 bis 16, die eine Rakelvorrichtung zum Bewegen über dem Kanal oder der Kanäle des Zuführabschnittes aufweist, um das Nahrungsmittel über die Länge des oder der Kanäle zu verteilen.

18. Vorrichtung nach einem der Ansprüche 1 bis 17, die einen Schneider am Ende des Verdichtungsabschnittes aufweist, um das Nahrungsmittel, das den Verdichtungsabschnitt verläßt, zu schneiden.

19. Vorrichtung nach einem der Ansprüche 1 bis 18 mit einer Verdichtungsplatte, um auf das Nahrungsmittel in dem Zuführabschnitt einen Druck auszuüben, so daß das Nahrungsmittel in Richtung auf das Treibelement zur weiteren Bewegung in den Verdichtungsabschnitt gedrückt wird.

20. Vorrichtung zum Herstellen von Nahrungsmitteln, mit Silos für Ingredienzen, mit einer Mischapparatur, mit Fördermitteln zum Überführen der Ingredienzen von den Silos zur Mischapparatur, mit einem Behälter für ein Bindemittel, mit Mitteln zum Zuführen des Bindemittels zu der Mischapparatur, mit einer Vorrichtung nach einem der Ansprüche 1 bis 19, mit einer Zuführvorrichtung zum Zuführen der gemischten Ingredienzen und des Bindemittels von der Mischapparatur zu der Vorrichtung nach einem der Ansprüche 1 bis 19, mit einem Ofen und mit einem Förderer zum Fördern des Nahrungsmittels aus dem Verdichtungsabschnitt durch den Ofen.

21. Verfahren zum Herstellen eines Nahrungsmittelerzeugnisses unter Verwendung einer Vorrichtung nach einem der Ansprüche 1 bis 20, das die folgenden Schritte aufweist, nämlich Einführen einer Nahrungsmittelmischung in einen Zuführabschnitt der Vorrichtung, Bewegen der Nahrungsmittelmischung entlang des offenen Kanals des Zuführabschnitts durch Betätigen eines Treibelementes, Verdichten der Nahrungsmittelmischung in dem Verdichtungsabschnitt und Entfernen des Nahrungsmittels, das den Verdichtungsabschnitt der Vorrichtung verläßt, zur weiteren Verarbeitung.

22. Verfahren nach Anspruch 21, bei dem das Treibelement kontinuierlich betrieben wird.

23. Verfahren nach Anspruch 21 oder 22, das ferner den Schritt aufweist, nämlich Auswählen einer gewünschten Länge des Verdichtungsabschnittes, um eine gewünschte Verdichtung der Nahrungsmittelmischung zu erzielen.

24. Verfahren nach einem der Ansprüche 21 bis 23 mit dem Schritt, nämlich Schneiden der Nahrungsmittelmischung, wenn sie den Verdichtungsabschnitt verläßt.

## Revendications

1. Dispositif de production de produits alimentaires à base de céréales fragiles, soufflées et en flocons ou croquantes, comportant une section d'alimentation et une section de compression, la section d'alimentation comportant un canal ouvert dans lequel du produit alimentaire incluant des céréales fragiles, soufflées, croquantes ou en flocons, destiné à être traité est introduit et un élément d'entraînement sensiblement horizontal dans le canal pour déplacer le produit alimentaire le long du canal sans entraîner une fragmentation excessive de la céréale soufflée, croquante ou en flocon, la section de compression étant voisine de la section d'alimentation, de sorte que du produit alimentaire est déplacé par l'élément d'entraînement à partir du canal dans la section de compression, la section de compression comportant un tube de longueur et section transversale souhaitées, de sorte qu'en utilisation du produit alimentaire est déplacé le long du canal et dans la section de compression par l'élément d'entraînement, soumis à une compression souhaitée dans la section de compression et quitte ensuite la section de compression à son extrémité à distance de la section d'alimentation dans un état sensiblement non fragmenté.

2. Dispositif suivant la revendication 1, dans lequel l'élément d'entraînement est un élément fileté oblong en forme de vis.

3. Dispositif suivant la revendication 2, dans lequel l'élément d'entraînement est un élément de vis en hélice ouverte.

4. Dispositif suivant la revendication 2, dans lequel l'élément d'entraînement est une extrudeuse.

5. Dispositif suivant l'une quelconque des revendications 1 à 4, dans lequel l'élément d'entraînement s'étend au moins partiellement le long de la longueur de la section de compression.

6. Dispositif suivant l'une quelconque des revendications 1 à 5, dans lequel la section d'alimentation comporte une pluralité de canaux parallèles et une section de compression ayant un nombre de tubes correspondants.

7. Dispositif suivant la revendication 6, comportant une pluralité de canaux parallèles, la section de compression ayant un nombre de tubes correspondants.

8. Dispositif suivant la revendication 6 ou 7, dans lequel la largeur de la section de compression de part et d'autre des canaux correspond à la largeur d'un convoyeur sur lequel du produit alimentaire quittant la section de compression tombe.

9. Dispositif suivant l'une quelconque des revendications 1 à 8, dans lequel le ou chaque élément d'entraînement est monté de manière amovible dans le dispositif pour permettre une interchangeabilité des éléments d'entraînement.

10. Dispositif suivant l'une quelconque des revendications 1 à 9, dans lequel le ou chaque élément d'entraînement a un diamètre compris entre 5 mm et 150 mm.

11. Dispositif suivant la revendication 10, dans lequel le ou chaque élément d'entraînement a un diamètre compris entre 10 mm et 25 mm.

12. Dispositif suivant la revendication 10, dans lequel le ou chaque élément d'entraînement a un diamètre compris entre 25 mm et 75 mm.

13. Dispositif suivant l'une quelconque des revendications 1 à 12, dans lequel le diamètre du ou de chaque tube dans la section de compression est plus grand que le diamètre de l'élément d'entraînement, et ce dans une mesure comprise entre 0,1 mm et 10 mm.

14. Dispositif suivant la revendication 13, dans lequel le diamètre du ou de chaque tube dans la section de compression est plus grand que le diamètre de l'élément d'entraînement, et ce dans une mesure de 1 mm à 5 mm.

15. Dispositif suivant l'une quelconque des revendications 1 à 14, dans lequel la section de compression comporte des moyens pour permettre une variation de la longueur du ou de chaque tube.

16. Dispositif suivant la revendication 15, dans lequel la variation de la longueur de la section de compression est obtenue par interchangeabilité d'éléments de section de compression.

17. Dispositif suivant l'une quelconque des revendications 1 à 16, comportant un dispositif de ratissage pour un mouvement sur le canal ou les canaux de section d'alimentation pour étaler le produit alimentaire le long de la longueur du ou des canaux.

18. Dispositif suivant l'une quelconque des revendications 1 à 17, comportant un couteau à l'extrémité de la section de compression pour couper en tronçons du produit alimentaire quittant la section de compression.

19. Dispositif suivant l'une quelconque des revendications 1 à 18, comportant une plaque de compression pour appliquer une pression au produit alimentaire à l'intérieur de la section d'alimentation, de sorte que le produit alimentaire est sollicité en direction de l'élément d'entraînement pour un mouvement vers l'avant dans la section de compression.

20. Dispositif de fabrication de produit alimentaire comportant des silos à ingrédient, des dispositifs de mélange, des moyens de convoyage pour transférer des ingrédients des silos vers le dispositif de mélange, un réservoir de liant, des moyens destinés à convoyer du liant au dispositif de mélange, un dispositif tel que revendiqué dans l'une quelconque des revendications 1 à 19, un dispositif de délivrance pour délivrer des ingrédients et du liant mélangés du dispositif de mélange vers le dispositif suivant l'une quelconque des revendications 1 à 19, un four et un convoyeur pour convoyer du produit alimentaire de la section de compression par le four.

21. Procédé de production d'un produit d'alimentation utilisant un dispositif suivant l'une quelconque des revendications 1 à 20, comportant les étapes qui consistent à introduire un mélange de produit alimentaire dans une section d'alimentation du dispositif, à déplacer le mélange du produit alimentaire le long du canal ouvert de la section d'alimentation en faisant fonctionner l'élément d'entraînement, à comprimer le mélange du produit alimentaire dans la section de compression et à éliminer pour un traitement supplémentaire du produit alimentaire quittant la section de compression du dispositif.

22. Procédé suivant la revendication 21, dans lequel l'élément d'entraînement fonctionne de manière continue.

23. Procédé suivant la revendication 21 ou 22, comportant une étape supplémentaire de sélection d'une longueur souhaitée de la section de compression pour obtenir une compression souhaitée du mélange du produit alimentaire.

24. Procédé suivant l'une quelconque des revendications 21 à 23, comportant l'étape qui consiste à couper le mélange du produit alimentaire au fur et à mesure qu'il quitte la section de compression.
